# FASCICULE DE BREVET EUROPEEN

(11) **EP 3 645 912 B1**
(45) Date de publication et mention de la délivrance du brevet: **14.04.2021**
(21) Numéro de dépôt: 18737680.1
(22) Date de dépôt: 18.06.2018
(51) Int. Cl.: F16G 11/10, H02G 1/04, H02G 7/02, H02G 7/04

(54) **DISPOSITIF ET PROCEDE DE BLOCAGE EN TENSION D'UN CABLE A L'AIDE D'UNE PINCE SERRE-CABLE**
VORRICHTUNG UND VERFAHREN ZUR SPANNUNGSVERRIEGELUNG EINES KABELS MITTELS KABELKLEMME
DEVICE AND METHOD FOR TENSION-LOCKING A CABLE BY MEANS OF A CABLE CLAMP

(30) Priorité: 30.06.2017 FR 1756178
(43) Date de publication de la demande: 06.05.2020
(73) Titulaire: RTE Réseau de Transport d'Electricité, 92073 La Défense Cedex (FR)
(72) Inventeur: OHAYON, David, 13090 Aix en Provence (FR); LOPEZ, Stéphane, 78210 Saint-Cyr-l'École (FR)
(74) Mandataire: Bonnet, Michel
(86) Numéro de dépôt international: PCT/FR2018/051449
(87) Numéro de publication internationale: WO 2019/002717

(56) Documents cités:
- CN-B- 102 832 570
- FR-A- 789 052
- GB-A- 1 592 827

## Description

La présente invention concerne un dispositif de blocage en tension d'un câble comportant une pince serre-câble. Elle concerne également un procédé correspondant Le document GB1592827 divulgue un dispositif de blocage en tension d'un câble similaire.

Elle s'applique en particulier, mais pas uniquement, au domaine de la construction et de la maintenance de lignes de transmission d'électricité à haute tension dans lesquelles des câbles de transport d'énergie électrique sont montés sur des pylônes successifs. Certaines opérations nécessitent par exemple le déroulage d'un câble le long d'un trajet ponctué par plusieurs pylônes successifs, dont un premier pylône de début de déroulage et un dernier pylône de fin de déroulage. Pour ce type d'opération, les pylônes sont préalablement équipés de poulies de déroulage conçues spécialement pour le déroulage et l'installation de câble héliporté à l'aide d'une dérouleuse de câble embarquée sous hélicoptère. Généralement munies de bras de guidage en « V », elles permettent au pilote de l'hélicoptère de déposer en vol le câble sur la poulie de déroulage d'un pylône grâce aux bras de guidage puis de se diriger vers le pylône suivant, et ainsi de suite dans un sens prédéterminé de déroulage allant du premier au dernier pylône. Le câble ainsi déroulé et déposé de pylône en pylône par l'hélicoptère peut être directement le câble conducteur d'électricité à haute tension qui devra ensuite être définitivement fixé aux pylônes selon des normes de sécurité imposées. Mais plus souvent, il s'agit d'un câble provisoire généralement appelé « câblette », plus léger et de diamètre inférieur au câble définitif, à partir d'une extrémité duquel le câble conducteur d'électricité à haute tension sera dans un deuxième temps treuillé le long du trajet constitué par les pylônes successifs considérés.

L'invention s'applique plus généralement à tout domaine dans lequel un câble, notamment à monter sur pylônes équipés de poulies de déroulage, doit être déroulé et installé quel que soit l'engin de déroulage utilisé (hélicoptère, grue mobile ou autres).

Dans tous les cas, une reprise d'effort en tension du câble est nécessaire en début de déroulage, au voisinage du premier pylône et dans le sens inverse du sens prédéterminé de déroulage, et en fin de déroulage, au voisinage du dernier pylône et dans le sens prédéterminé de déroulage. En effet, lorsque c'est le câble conducteur définitif qui est déroulé, la procédure de déroulage nécessite que celui-ci soit fixé au premier pylône une fois déposé sur la première poulie de déroulage pour que l'hélicoptère puisse poursuivre son opération et qu'il soit fixé également au dernier pylône une fois déposé sur la dernière poulie de déroulage pour libérer l'hélicoptère de toute tension dangereuse avant qu'il ne se pose au sol. Lorsque c'est un câble provisoire qui est déroulé, celui-ci doit de même pouvoir être bloqué temporairement en début et en fin de déroulage pour faciliter le raccordement du câble conducteur définitif et l'opération de treuillage : l'hélicoptère doit effectivement également pouvoir se poser en fin de déroulage du câble provisoire sans tension, tout comme l'exige l'opération de connexion du câble provisoire au câble conducteur définitif.

Dans ce contexte aux contraintes de sécurité difficiles, une procédure idéale de déroulage et d'installation de câble conducteur d'électricité à haute tension est privilégiée : elle prévoit le déroulage et l'installation provisoire d'une câblette, puis le treuillage du câble conducteur définitif. En ce qui concerne le déroulage lui-même, la procédure comporte huit phases : une première phase consiste à dérouler par hélicoptère une partie de la câblette, éventuellement équipée d'une masse à son extrémité libre afin de la stabiliser en amont du premier pylône dans le sens prédéterminé de déroulage, et à l'approcher du premier pylône ; la deuxième phase consiste à déposer par hélicoptère la câblette dans le réa de poulie de déroulage du premier pylône et à maintenir la câblette en tension dans le sens opposé du sens prédéterminé de déroulage ; la troisième phase consiste à poursuivre le déroulage et l'installation de la câblette sur poulies de déroulage de pylône en pylône jusqu'à l'avant-dernier pylône tout en maintenant une tension suffisante dans la câblette ; la quatrième phase consiste à approcher par hélicoptère la câblette du dernier pylône ; la cinquième phase consiste à déposer par hélicoptère la câblette dans le réa de poulie de déroulage du dernier pylône ; la sixième phase consiste à s'éloigner du dernier pylône et à bloquer la câblette en tension dans le sens prédéterminé de déroulage pour libérer l'hélicoptère ; la septième phase consiste à déposer la câblette au sol ; la huitième phase consiste enfin à poser l'hélicoptère au sol.

Si l'on dispose de suffisamment de place en amont du premier pylône et en aval du dernier pylône, le maintien en tension de la câblette en début et en fin de déroulage peut se faire au sol. Cela permet d'éviter la présence d'opérateurs sur les premier et dernier pylônes lorsque l'hélicoptère déroule la câblette. Mais malheureusement, cette situation géographique idéale n'est pas toujours vérifiée.

En particulier, en début de déroulage, le premier pylône peut ne pas disposer de suffisamment de place en amont (relief, infrastructures, ...) pour permettre le maintien en tension précité. Dans ce cas, lors de l'exécution des première et deuxième phases, deux opérateurs doivent monter au sommet du premier pylône : l'un pour échanger en permanence avec le pilote de l'hélicoptère qui maintient son appareil en vol stationnaire, l'autre pour bloquer le câble en tension sur le premier pylône lorsqu'il est déposé dans le réa de poulie de déroulage, généralement à l'aide d'un manchon, d'une frette et d'un serre-câble ou d'une pince serre-câble à organe de traction.

Lorsque c'est le câble conducteur définitif qui est déroulé par l'hélicoptère, son extrémité libre à fixer sur le premier pylône est généralement munie d'un manchon spécifique devant être raccordé à une chaîne d'isolateurs ou à la structure du pylône, ou d'une frette permettant une fixation du câble au pylône à l'aide d'un serre-câble. Lorsque c'est un câble provisoire qui est déroulé par l'hélicoptère, l'opérateur en charge du blocage de câble utilise généralement une pince serre-câble à mâchoires de serrage et à organe de traction. Une telle pince est conçue pour que ses mâchoires soient actionnées en serrage du câble par traction exercée sur une première extrémité de l'organe de traction dont une deuxième extrémité est mécaniquement liée à au moins l'une des mâchoires. Ainsi, en fixant la première extrémité de l'organe de traction à la structure du premier pylône, on bloque le câble et on maintient une tension dirigée dans le sens opposé au sens de déroulage de câble permettant au pilote de l'hélicoptère de poursuivre le déroulage et l'installation de câble.

La proximité de l'hélicoptère rend cette opération de blocage en tension de câble particulièrement chronophage et risquée.

Il peut ainsi être souhaité de prévoir un dispositif de blocage en tension qui permette de s'affranchir d'au moins une partie des problèmes et contraintes précités.

Il est donc proposé un dispositif de blocage en tension d'un câble, comportant une pince serre-câble à mâchoires de serrage et à organe de traction, ladite pince étant conçue pour que ses mâchoires soient actionnées en serrage par traction exercée sur une première extrémité de l'organe de traction dont une deuxième extrémité est mécaniquement liée en déplacement à au moins l'une des mâchoires, dans lequel :
- le dispositif de blocage comporte un premier élément femelle présentant un passage destiné à être traversé par le câble,
- la pince serre-câble est montée dans un deuxième élément mâle du dispositif de blocage, ce deuxième élément mâle étant indépendant du premier élément femelle et destiné à être solidaire du câble par serrage des mâchoires de la pince contre le câble,

- le deuxième élément mâle et le passage du premier élément femelle sont dimensionnés pour qu'une partie du deuxième élément mâle incluant au moins les mâchoires de serrage puisse traverser le passage, et
- le deuxième élément mâle comporte en outre une butée, fixée à la première extrémité de l'organe de traction, de dimensions l'empêchant de traverser le passage.

Ainsi, aucune intervention humaine n'est nécessaire pour le blocage en tension d'un câble déposé sur le premier pylône d'une succession de pylônes sur lesquels doit être déroulé ce câble, puisque ce blocage est assuré automatiquement par une coopération entre la butée du deuxième élément mâle et les parois délimitant le passage du premier élément femelle du dispositif de blocage. En outre l'automatisation du blocage permet d'accélérer significativement l'exécution des première et deuxième phases précitées, ce qui réduit le temps de vol de l'hélicoptère et permet une meilleure productivité. Celles-ci peuvent donc être réalisées rapidement et en toute sécurité.

De façon optionnelle, la pince serre-câble est pourvue d'un élément de pré-serrage s'étendant entre ses mâchoires.

De façon optionnelle également, l'élément de pré-serrage comporte un ridoir dont au moins une extrémité est désolidarisable de l'une des mâchoires à l'aide d'une cordelette de libération dont une extrémité est fixée au ridoir.

De façon optionnelle également, le premier élément femelle comporte un anneau de maintien du câble, présentant une ouverture à pivot, par exemple à mousqueton, pour une insertion du câble dans l'anneau.

De façon optionnelle également, le premier élément femelle comporte une fourche de fixation à un support et porteuse de l'anneau de maintien.

De façon optionnelle également, le deuxième élément mâle comporte un capot de protection des mâchoires de serrage présentant une forme fuselée et des arêtes arrondies facilitant son insertion dans le passage du premier élément femelle.

De façon optionnelle également, la butée du deuxième élément mâle comporte :
- une portion conique ou hémisphérique fixée, dans sa partie de moindre diamètre radial, à la première extrémité de l'organe de traction, et
- une collerette, dans le prolongement de la partie de plus grand diamètre radial de la portion conique ou hémisphérique, dont le diamètre extérieur est supérieur aux dimensions du passage du premier élément femelle.

De façon optionnelle également, la butée du deuxième élément mâle comporte une rainure radiale d'insertion du câble.

De façon optionnelle également, un dispositif de blocage selon l'invention peut en outre comporter un indicateur lumineux dont l'allumage est provoqué automatiquement par contact entre le premier élément femelle et le deuxième élément mâle.

Il est également proposé un procédé de blocage en tension d'un câble à l'aide d'un dispositif de blocage selon l'invention, comportant les étapes suivantes :
- fixation du premier élément femelle du dispositif de blocage à un support, et insertion du câble dans le passage de ce premier élément femelle,
- fixation du deuxième élément mâle du dispositif de blocage au câble, en amont du passage traversé par le câble selon un sens prédéterminé de traction du câble, par pré-serrage des mâchoires de la pince serre-câble contre le câble, et
- traction du câble dans le sens prédéterminé jusqu'à ce que la butée du deuxième élément mâle atteigne le passage du premier élément femelle et bloque le câble en tension par butée contre le premier élément femelle et par traction exercée sur l'organe de traction provoquant un serrage supplémentaire des mâchoires contre le câble.

De façon optionnelle, la traction du câble est réalisée à l'aide d'un hélicoptère, porteur d'un câble supplémentaire dont une extrémité libre est munie de moyens de fixation au câble déposé sur un réa d'une poulie de déroulage, de la façon suivante :
- on munit l'extrémité libre du câble déposé sur le réa de poulie, située en aval de la poulie selon le sens prédéterminé de traction, de moyens de fixation au câble supplémentaire et on la dépose au sol,
- on raccorde entre eux au sol les moyens de fixation du câble déposé sur le réa de poulie et du câble supplémentaire, et
- la traction de l'hélicoptère agit sur le câble supplémentaire qui entraîne en traction le câble déposé sur le réa de poulie.

L'invention sera mieux comprise à l'aide de la description qui va suivre, donnée uniquement à titre d'exemple et faite en se référant aux dessins annexés dans lesquels :
- les figures 1 et 2 représentent schématiquement en perspective la structure générale d'un exemple de pince serre-câble pouvant être utilisée dans un dispositif de blocage selon l'invention, en disposition respectivement desserrée et resserrée de ses mâchoires,
- la figure 3 représente schématiquement en perspective la structure générale d'un dispositif de blocage en tension d'un câble selon un mode de réalisation de l'invention, comportant la pince serre-câble des figures 1 et 2,
- la figure 4 représente schématiquement en perspective le dispositif de blocage en tension de la figure 3 monté sur une poulie de déroulage et en position de blocage de câble,
- la figure 5 illustre les étapes successives d'un procédé d'installation et de blocage en tension d'un câble sur une structure munie d'une poulie de déroulage, et
- les figures 6, 7 et 8 représentent schématiquement une installation de déroulage de câble au cours de trois des étapes du procédé de la figure 5.

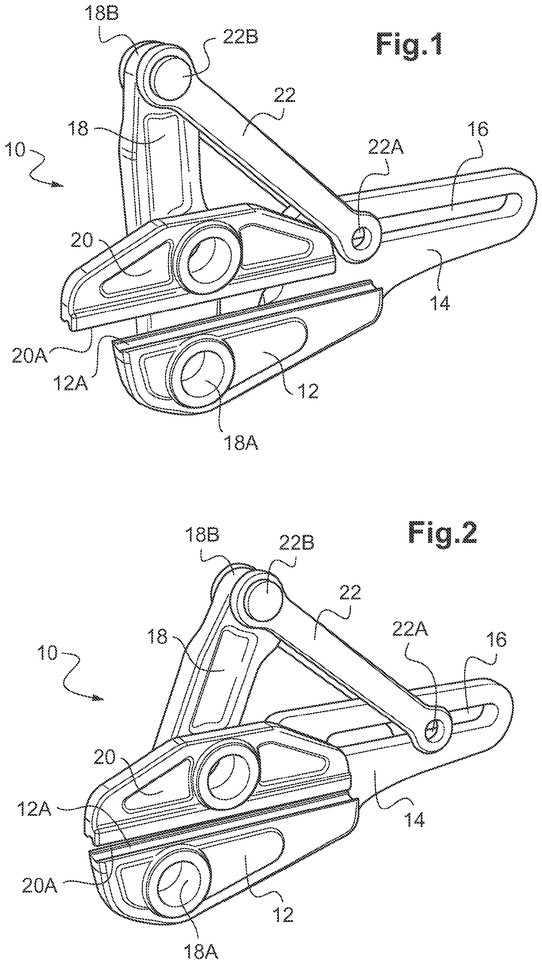

La pince serre-câble 10 représentée sur la figure 1 comporte une mâchoire de serrage inférieure 12 prolongée par un bras de guidage 14 dans lequel est aménagé un trou traversant oblong 16. Elle comporte en outre un bras de levier 18 dont une première extrémité 18A est fixée en liaison pivot à la mâchoire de serrage inférieure 12. Elle comporte en outre une mâchoire de serrage supérieure 20 fixée en liaison pivot sur une portion médiane du bras de levier 18. La mâchoire de serrage supérieure 20 présente une rainure 20A de maintien de câble faisant face à une rainure 12A correspondante de la mâchoire de serrage inférieure 12. La pince serre-câble 10 comporte enfin un organe de traction 22 à double bras, dont une première extrémité 22A, matérialisée par un premier arbre de raccordement du double bras, coulisse librement à l'intérieur du trou traversant oblong 16 et dont une deuxième extrémité 22B, matérialisée par un deuxième arbre de raccordement du double bras, est fixée en liaison pivot à une deuxième extrémité 18B du bras de levier 18.

Ainsi, par effet de levier, le coulissement de la première extrémité 22A de l'organe de traction 22 dans le trou traversant oblong 16 engendre un rapprochement ou un éloignement des deux mâchoires 12 et 20 selon le sens de coulissement. Plus précisément, lorsque l'on pousse la première extrémité 22A de l'organe de traction 22 vers une extrémité proximale (i.e. proche des deux mâchoires) du trou traversant oblong 16, cela engendre un redressement du bras de levier 18 et un desserrement des deux mâchoires 12 et 20. Au contraire, lorsque l'on tire la première extrémité 22A de l'organe de traction 22 vers une extrémité distale (i.e. éloignée des deux mâchoires) du trou traversant oblong 16, cela engendre un rabattement du bras de levier 18 et un resserrement des deux mâchoires 12 et 20.

La pince serre-câble 10 de la figure 1 est représentée en disposition desserrée de ses mâchoires 12 et 20, l'extrémité 22A de l'organe de traction 22 étant précisément positionnée à l'extrémité proximale du trou traversant oblong 16 du bras de guidage 14.

La même pince serre-câble 10 est représentée sur la figure 2 en disposition resserrée de ses mâchoires 12 et 20, l'extrémité 22A de l'organe de traction 22 étant déplacée vers l'extrémité distale du trou traversant oblong 16 du bras de guidage 14.

Une telle pince serre-câble 10 convient pour un dispositif de blocage selon la présente invention. Mais il ne s'agit que d'un exemple non limitatif. De multiples pinces serre-câble différentes peuvent aussi convenir. Il suffit qu'elles présentent les caractéristiques générales suivantes : des mâchoires de serrage et un organe de traction coopérant pour que les mâchoires soient actionnées en serrage par traction exercée sur une première extrémité de l'organe de traction dont une deuxième extrémité est mécaniquement liée en déplacement à au moins l'une des mâchoires.

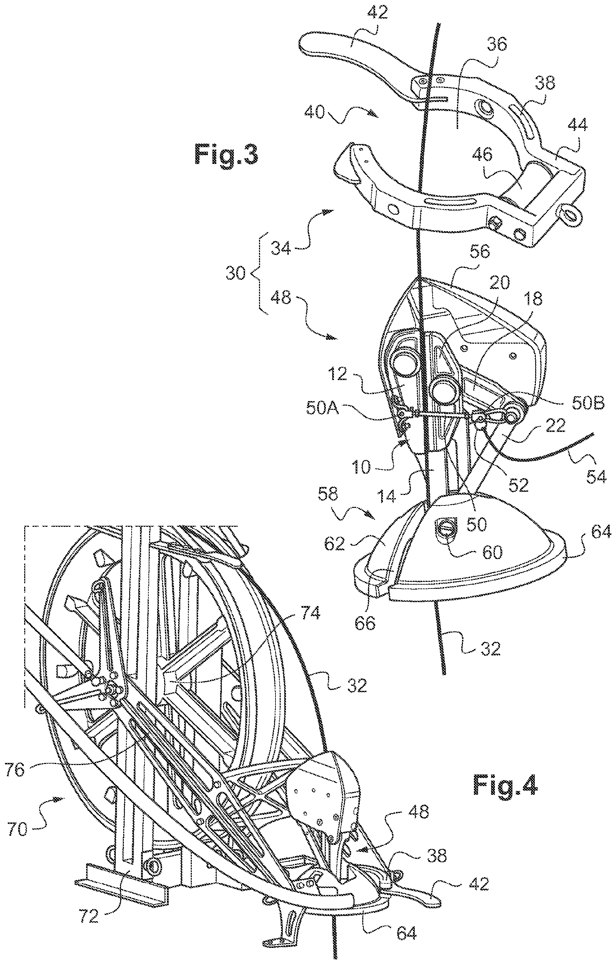

Le dispositif 30 de blocage en tension d'un câble 32 illustré sur la figure 3 inclut la pince serre-câble 10 des figures 1 et 2 comme cela va maintenant être expliqué en détail.

Il comporte tout d'abord un premier élément femelle 34, destiné à être solidaire d'une poulie de déroulage, présentant un passage 36 destiné à être traversé par le câble 32 lorsque ce dernier est déposé sur un réa de la poulie de déroulage. Plus précisément, le premier élément femelle 34 peut prendre la forme d'un anneau 38 de maintien du câble 32. Pour pouvoir insérer le câble 32 dans l'anneau 38, une ouverture refermable 40 à languette pivotante 42, par exemple à mousqueton ou autre, est prévue sur l'anneau 38. Le passage 36 est donc constitué de l'espace intérieur de l'anneau 38 lorsqu'il est fermé par la languette 42. Une portion de l'anneau 38, par exemple opposée à l'ouverture 40, est en outre pourvue d'une armature 44 de fixation, directe ou indirecte, à une poulie de déroulage. Cette même portion comporte avantageusement un cylindre rotatif 46 contre lequel est destiné à reposer le câble 32 pour limiter les frottements entre ce dernier et l'anneau 38.

Le dispositif de blocage 30 comporte en outre un deuxième élément mâle 48 dans lequel est montée la pince serre-câble 10. Ce deuxième élément mâle 48 est indépendant du premier élément femelle 34 et est destiné à être solidaire du câble 32 par serrage des mâchoires 12 et 20 de la pince 10 contre le câble 32. A cet effet, la pince serre-câble 10 est pourvue d'un élément 50 de pré-serrage s'étendant entre ses mâchoires 12 et 20. Plus précisément, l'élément de pré-serrage 50 est par exemple un ridoir dont une première extrémité 50A est fixée de façon non amovible à la mâchoire de serrage inférieure 12 tandis que sa deuxième extrémité 50B, par exemple à boucle, est fixée de façon amovible à l'arbre de connexion des deuxièmes extrémités 18B, 22B du bras de pivot 18 et de l'organe de traction 22. Cette deuxième extrémité 50B est donc ainsi indirectement liée à la mâchoire de serrage supérieure 20 par disposition de sa boucle autour de l'arbre de connexion précité. Elle peut être munie d'un anneau de largage 52 auquel est fixée une extrémité d'une cordelette de libération 54. Ainsi, en tirant sur la cordelette 54, on désengage la boucle de l'arbre de connexion, ce qui a pour effet de libérer les mâchoires de serrage 12 et 20 (sans autre contrainte sur l'élément mâle 48) et donc le câble 32. Le ridoir 50 est un élément de pré-serrage intéressant parce qu'il permet un réglage manuel fin du pré-serrage des mâchoires 12, 20 que l'on peut aisément adapter au contexte.

Le deuxième élément mâle 48 comporte en outre un capot 56 de protection des mâchoires de serrage 12 et 20 de la pince serre-câble 10. Ce capot 56 est par exemple fixé à la mâchoire de serrage inférieure 12 par vissage contre sa face opposée à celle qui reçoit la première extrémité 50A du ridoir 50. Selon le mode de réalisation illustré sur la figure 3, il ne protège ainsi qu'une face de la pince serre-câble 10 pour permettre une insertion aisée du câble 32 entre les deux mâchoires 12 et 20 par l'autre face. Il remplit une première fonction de protection des parties potentiellement fragiles de la pince serre-câble 10, telles que les deux mâchoires de serrage 12, 20 et le bras pivot 18. En variante et pour une protection plus complète, il pourrait être constitué de deux moitiés destinées à être rapportées et fixées l'une contre l'autre, avec aménagement d'un trou pour le passage du câble 32.

Le deuxième élément mâle 48 comporte en outre une butée 58, fixée à la première extrémité 22A de l'organe de traction 22, par exemple par un système à vis 60 permettant toutefois une liberté en pivot entre la butée 58 et l'organe de traction 22.

Conformément à un principe général de la présente invention, la butée 58 présente des dimensions l'empêchant de traverser le passage 36 délimité par l'anneau 38 du premier élément femelle 34. En revanche, toujours selon ce même principe, le deuxième élément mâle 48 et le passage 36 du premier élément femelle 34 sont dimensionnés pour qu'une partie du deuxième élément mâle 48 incluant au moins les mâchoires de serrage 12 et 20 puisse traverser le passage 36. Plus précisément, toute la partie incluant le capot 56, le bras de guidage 14, l'organe de traction 22, et s'étendant jusqu'à une bonne partie de la butée 58 est dimensionnée pour pouvoir traverser le passage 36 dans l'exemple de la figure 3. A cet effet, le capot 56 présente avantageusement une forme fuselée et des arêtes arrondies lui permettant de remplir une deuxième fonction : faciliter son insertion, et donc celle des éléments qu'il couvre, dans le passage 36 du premier élément femelle 34.

A titre d'exemple de réalisation possible, la butée 58 comporte une portion hémisphérique 62 fixée par le système de vissage 60, dans sa partie de moindre diamètre radial, à la première extrémité 22A de l'organe de traction 22. En variante, cette portion pourrait également être conique ou de toute autre forme facilitant son insertion dans le passage 36. La butée 58 comporte en outre une collerette 64, dans le prolongement de la partie de plus grand diamètre radial de la portion hémisphérique 62. Le diamètre extérieur de cette collerette 64 est supérieur aux dimensions du passage 36, c'est-à-dire supérieur au diamètre intérieur de l'anneau 38 du premier élément femelle 34.

La butée 58 présente en outre avantageusement une rainure radiale 66 d'insertion du câble 32.

Le dispositif de blocage 30 illustré sur la figure 3 fonctionne de la façon suivante :
- on introduit le câble 32 par l'ouverture 40 dans le passage 36 de l'anneau 38 du premier élément femelle 34, puis on referme l'ouverture 40 à l'aide de la languette pivotante 42,
- on fixe le deuxième élément mâle 48 au câble 32 en introduisant ce dernier par la rainure 66 entre les deux mâchoires de serrage 12 et 20 de la pince serre-câble 10 et en pré-serrant ces deux mâchoires à l'aide du ridoir 50,
- en tirant sur le câble 32 vers le haut selon la disposition relative des éléments sur la figure 3, on rapproche le deuxième élément mâle 48 du premier élément femelle 34 jusqu'à l'introduire complètement dans le passage 36 à l'exception de la collerette 64 qui vient buter contre l'anneau 38,
- en continuant à tirer sur le câble 32 vers le haut, on ne fait qu'augmenter la tension de la collerette 64 contre l'anneau 38, ce qui engendre une force de traction exercée vers le bas sur la première extrémité 22A de l'organe de traction, la rapprochant ainsi de l'extrémité distale du trou traversant oblong 16, ce qui provoque un renforcement du resserrement des deux mâchoires 12 et 20 contre le câble 32 et son blocage.

La figure 4 illustre plus précisément comment monter le dispositif de blocage 30 de la figure 3 sur une poulie de déroulage.

Une poulie 70 est fixée à une structure porteuse 72, par exemple un pylône, de manière à rester libre en rotation autour d'un arbre central 74 porté par la structure 72. Une fourche 76 est également fixée à l'arbre central 74 et porte l'anneau 38 à son extrémité libre qui s'étend au-delà du rayon de la poulie 70. Elle constitue ainsi un composant du premier élément femelle 34 qui permet de le raccorder à la poulie 70. Le câble 32, auquel est fixé le deuxième élément mâle 48 du dispositif de blocage 30 est disposé sur un réa de la poulie 70 et introduit dans l'anneau 38. Toute tension exercée sur le câble 32 en vue de l'opération de déroulage entraînant une rotation en sens anti-horaire de la poulie 70, selon le point de vue de la figure 4, engendre son blocage par butée de la collerette 64 contre l'anneau 38 comme illustré.

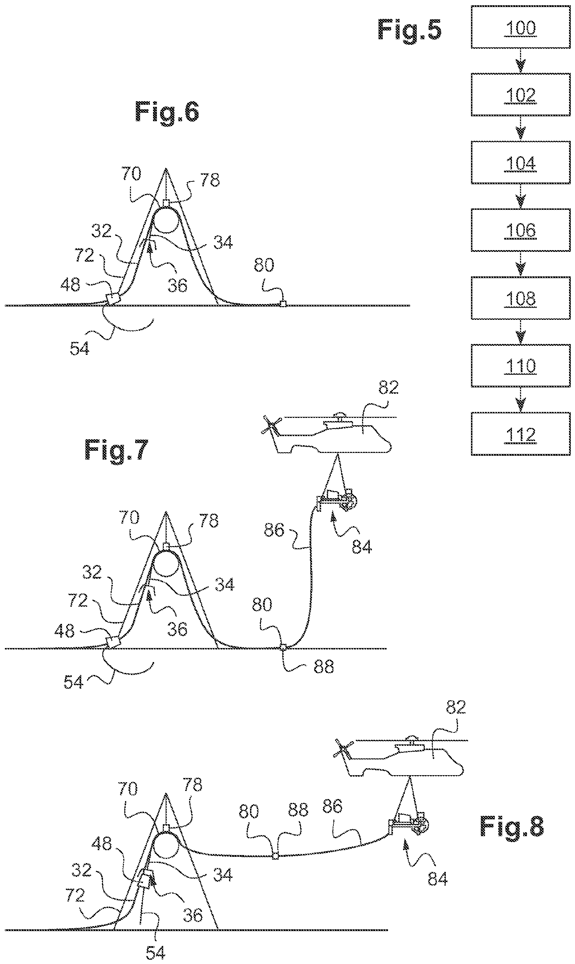

Un procédé plus global d'installation et de blocage en tension d'un câble sur une structure munie d'une poulie de déroulage va maintenant être décrit en référence aux figures 5 à 8.

Au cours d'une première étape 100, la poulie de déroulage 70 est installée sur la structure porteuse 72 qui est par exemple un pylône d'un réseau de transport d'électricité à haute tension par câble. La poulie 70 est avantageusement munie d'un indicateur lumineux 78, par exemple un gyrophare, qui s'allume automatiquement lorsque le deuxième élément mâle 48 vient au contact du premier élément femelle 34 pour indiquer le blocage en tension effectif du câble 32.

Au cours d'une étape suivante 102, le premier élément femelle 34 du dispositif de blocage 30 est fixé, comme indiqué sur la figure 4, à la poulie de déroulage 70. Plus précisément, la fourche 76 porteuse de l'anneau 38 est fixée à l'arbre central 74 qui lui sert de support. Au cours de cette même étape, le câble 32, préalablement posé sur un réa de la poulie de déroulage 70, est inséré dans le passage 36 du premier élément femelle 34.

Au cours d'une étape 104, le deuxième élément mâle 48 du dispositif de blocage 30 est fixé au câble 32 par pré-serrage de ses mâchoires 12 et 20. Cette opération se fait avantageusement au sol et en amont du passage 36 traversé par le câble 32 selon le sens prédéterminé de traction du câble. Au cours de cette même étape, on installe la cordelette de libération 54 en la fixant à l'anneau de largage 52 du ridoir 50 du deuxième élément mâle 48.

Au cours d'une étape 106, on munit l'extrémité libre du câble 32 située en aval de la poulie de déroulage 70 selon le sens prédéterminé de traction, de moyens 80 de fixation à un câble supplémentaire et on la dépose au sol. Ces moyens de fixation 80 comportent par exemple une noix de jonction.

L'exécution des étapes 100 à 106 permet d'arriver à la situation de la figure 6.

Au cours d'une étape suivante 108, un hélicoptère 82 porteur d'une dérouleuse 84 d'un câble supplémentaire 86 s'approche de l'installation illustrée sur la figure 6. L'extrémité libre du câble supplémentaire 86 est munie de moyens de fixation 88 complémentaires de la noix de jonction 80.

Ensuite, lors d'une étape 110, le pilote ou un copilote de l'hélicoptère 82 déroule le câble supplémentaire 86 jusqu'à ce que son extrémité libre atteigne le sol et un opérateur au sol raccorde entre eux les moyens de fixation 80 et 88 pour solidariser le câble 32 et le câble supplémentaire 86.

L'exécution des étapes 108 et 110 permet d'arriver à la situation de la figure 7.

Au cours d'une étape suivante 112, l'hélicoptère 82 s'éloigne du pylône 72 dans le sens prédéterminé de déroulement du câble supplémentaire 86, c'est-à-dire vers la droite sur les figures 6, 7 et 8, sans pour autant dérouler le câble supplémentaire 86. La traction alors exercée par l'hélicoptère 82 sur le câble supplémentaire 86 entraîne également en traction le câble 32 jusqu'à ce que la butée 58 du deuxième élément mâle 48 atteigne le passage 36 du premier élément femelle 34 et bloque le câble 32 en tension par butée contre le premier élément femelle 34 et par traction exercée sur l'organe de traction 22 provoquant un serrage supplémentaire des mâchoires 12 et 20 contre le câble 32.

On arrive ainsi à la situation de la figure 8.

Cette situation provoque l'allumage du gyrophare 78, ce qui indique au pilote ou copilote de l'hélicoptère 82 en charge de l'opération de déroulage de câble qu'il peut actionner la dérouleuse 84 et poursuivre l'opération.

On notera qu'une fois l'opération de déroulage de câble terminée, il est avantageux de pouvoir débloquer simplement le câble 32. C'est aisément réalisable grâce à la cordelette de libération 54. Il suffit en effet de tirer sur cette cordelette 54 depuis le sol pour libérer le ridoir 50, ce qui libère les mâchoires 12, 20 et provoque la chute de l'élément mâle 48 du dispositif de blocage 30.

Il apparaît clairement qu'un dispositif de blocage tel que celui décrit précédemment permet le blocage en tension d'un câble déposé sur le premier pylône d'une succession de pylônes sur lesquels doit être déroulé ce câble de façon automatique et sans aucune intervention humaine pendant la phase d'approche de l'hélicoptère. La cordelette 54 permet en outre de libérer aisément le dispositif de blocage pour permettre l'opération suivante de treuillage.

On notera par ailleurs que l'invention n'est pas limitée au mode de réalisation décrit précédemment. Il apparaîtra en effet à l'homme de l'art que diverses modifications peuvent être apportées au mode de réalisation décrit ci-dessus, à la lumière de l'enseignement qui vient de lui être divulgué.

## Revendications

1. Dispositif (30) de blocage en tension d'un câble (32), comportant une pince serre-câble (10) à mâchoires de serrage (12, 20) et à organe de traction (22), ladite pince (10) étant conçue pour que ses mâchoires (12, 20) soient actionnées en serrage par traction exercée sur une première extrémité (22A) de l'organe de traction (22) dont une deuxième extrémité (22B) est mécaniquement liée en déplacement à au moins l'une des mâchoires (12, 20), **caractérisé en ce que** :
- le dispositif de blocage (30) comporte un premier élément femelle (34) présentant un passage (36) destiné à être traversé par le câble (32),
- la pince serre-câble (10) est montée dans un deuxième élément mâle (48) du dispositif de blocage (30), ce deuxième élément mâle (48) étant indépendant du premier élément femelle (34) et destiné à être solidaire du câble (32) par serrage des mâchoires (12, 20) de la pince (10) contre le câble (32),
- le deuxième élément mâle (48) et le passage (36) du premier élément femelle (34) sont dimensionnés pour qu'une partie du deuxième élément mâle (48) incluant au moins les mâchoires de serrage (12, 20) puisse traverser le passage (36), et
- le deuxième élément mâle (48) comporte en outre une butée (58), fixée à la première extrémité (22A) de l'organe de traction (22), de dimensions l'empêchant de traverser le passage (36).

2. Dispositif de blocage (30) selon la revendication 1, dans lequel la pince serre-câble (10) est pourvue d'un élément (50) de pré-serrage s'étendant entre ses mâchoires (12, 20).

3. Dispositif de blocage (30) selon la revendication 2, dans lequel l'élément de pré-serrage (50) comporte un ridoir dont au moins une extrémité (50B) est désolidarisable de l'une des mâchoires (12, 20) à l'aide d'une cordelette de libération (54) dont une extrémité est fixée au ridoir.

4. Dispositif de blocage (30) selon l'une quelconque des revendications 1 à 3, dans lequel le premier élément femelle (34) comporte un anneau (38) de maintien du câble (32), présentant une ouverture (40) à pivot (42), par exemple à mousqueton, pour une insertion du câble (32) dans l'anneau (38).

5. Dispositif de blocage (30) selon la revendication 4, dans lequel le premier élément femelle (34) comporte une fourche (76) de fixation à un support (74) et porteuse de l'anneau de maintien (38).

6. Dispositif de blocage (30) selon l'une quelconque des revendications 1 à 5, dans lequel le deuxième élément mâle (48) comporte un capot (56) de protection des mâchoires de serrage (12, 20) présentant une forme fuselée et des arêtes arrondies facilitant son insertion dans le passage (36) du premier élément femelle (34).

7. Dispositif de blocage (30) selon l'une quelconque des revendications 1 à 6, dans lequel la butée (58) du deuxième élément mâle (48) comporte :
- une portion conique ou hémisphérique (62) fixée, dans sa partie de moindre diamètre radial, à la première extrémité (22A) de l'organe de traction (22), et
- une collerette (64), dans le prolongement de la partie de plus grand diamètre radial de la portion conique ou hémisphérique (62), dont le diamètre extérieur est supérieur aux dimensions du passage (36) du premier élément femelle (34).

8. Dispositif de blocage (30) selon la revendication 7, dans lequel la butée (58) du deuxième élément mâle (48) comporte une rainure radiale (66) d'insertion du câble (32).

9. Dispositif de blocage (30) selon l'une quelconque des revendications 1 à 8, comportant en outre un indicateur lumineux (78) dont l'allumage est provoqué automatiquement par contact entre le premier élément femelle (34) et le deuxième élément mâle (48).

10. Procédé de blocage en tension d'un câble (32) à l'aide d'un dispositif de blocage (30) selon l'une quelconque des revendications 1 à 9, comportant les étapes suivantes :
- fixation (102) du premier élément femelle (34) du dispositif de blocage (30) à un support (74), et insertion du câble (32) dans le passage (36) de ce premier élément femelle (34),
- fixation (104) du deuxième élément mâle (48) du dispositif de blocage (30) au câble (32), en amont du passage (36) traversé par le câble (32) selon un sens prédéterminé de traction du câble (32), par pré-serrage des mâchoires (12, 20) de la pince serre-câble (10) contre le câble (32), et
- traction (112) du câble dans le sens prédéterminé jusqu'à ce que la butée (58) du deuxième élément mâle (48) atteigne le passage (36) du premier élément femelle (34) et bloque le câble (32) en tension par butée contre le premier élément femelle (34) et par traction exercée sur l'organe de traction (22) provoquant un serrage supplémentaire des mâchoires (12, 20) contre le câble (32).

11. Procédé de blocage selon la revendication 10, dans lequel la traction (112) du câble (32) est réalisée à l'aide d'un hélicoptère (82), porteur d'un câble supplémentaire (86) dont une extrémité libre est munie de moyens (88) de fixation au câble (32) déposé sur un réa d'une poulie de déroulage (70), de la façon suivante :
- on munit (106) l'extrémité libre du câble (32) déposé sur le réa de poulie (70), située en aval de la poulie (70) selon le sens prédéterminé de traction, de moyens (80) de fixation au câble supplémentaire (86) et on la dépose au sol,
- on raccorde (110) entre eux au sol les moyens (80, 88) de fixation du câble (32) déposé sur le réa de poulie et du câble supplémentaire (86), et
- la traction (112) de l'hélicoptère (82) agit sur le câble supplémentaire (86) qui entraîne en traction le câble (32) déposé sur le réa de poulie (70).

## Patentansprüche

1. Vorrichtung (30) zur Zugverriegelung eines Seils (32), die eine Seilspannzange (10) mit Spannbacken (12, 20) und mit einem Zugglied (22) umfasst, wobei die Zange (10) so gestaltet ist, dass ihre Backen (12, 20) durch Zug, der auf ein erstes Ende (22A) des Zugglieds (22) ausgeübt wird, von dem ein zweites Ende (22B) mechanisch verschiebbar mit mindestens einer der Backen (12, 20) verbunden ist, verspannt werden, **dadurch gekennzeichnet, dass**:
- die Verriegelungsvorrichtung (30) ein erstes, weibliches Element (34) umfasst, das einen Durchgang (36) aufweist, der dazu bestimmt ist, vom Seil (32) durchlaufen zu werden,
- die Seilspannzange (10) in einem zweiten, männlichen Element (48) der Verriegelungsvorrichtung (30) montiert ist, wobei dieses zweite männliche Element (48) vom ersten weiblichen Element (34) unabhängig und dazu bestimmt ist, durch Verspannen der Backen (12, 20) der Zange (10) am Seil (32) fest mit dem Seil (32) verbunden zu werden,
- das zweite männliche Element (48) und der Durchgang (36) des ersten weiblichen Elements (34) so bemessen sind, dass ein Teil des zweiten männlichen Elements (48), der mindestens die Spannbacken (12, 20) einschließt, durch den Durchgang (36) treten kann, und
- das zweite männliche Element (48) weiter einen am ersten Ende (22A) des Zugglieds (22) befestigten Anschlag (58) mit Abmessungen umfasst, die ihn daran hindern, durch den Durchgang (36) zu treten.

2. Verriegelungsvorrichtung (30) nach Anspruch 1, wobei die Seilspannzange (10) mit einem Vorspannelement (50) versehen ist, das sich zwischen ihren Backen (12, 20) erstreckt.

3. Verriegelungsvorrichtung (30) nach Anspruch 2, wobei das Vorspannelement (50) ein Spannschloss umfasst, von dem mindestens ein Ende (50B) mit Hilfe einer Löseschnur (54), von der ein Ende am Spannschloss befestigt ist, von einer der Backen (12, 20) distanziert werden kann.

4. Verriegelungsvorrichtung (30) nach einem der Ansprüche 1 bis 3, wobei das erste weibliche Element (34) einen Ring (38) zum Halten des Seils (32) umfasst, der eine Öffnung (40) mit Schwenkarm (42), zum Beispiel mit Karabiner, für ein Einführen des Seils (32) in den Ring (38) aufweist.

5. Verriegelungsvorrichtung (30) nach Anspruch 4, wobei das erste weibliche Element (34) eine Gabel (76) zum Befestigen an einem Träger (74) umfasst, die den Haltering (38) trägt.

6. Verriegelungsvorrichtung (30) nach einem der Ansprüche 1 bis 5, wobei das zweite männliche Element (48) eine Abdeckung (56) zum Schutz der Spannbacken (12, 20) umfasst, die eine sich verjüngende Form und abgerundete Kanten aufweist, die sein Einführen in den Durchgang (36) des ersten weiblichen Elements (34) erleichtert.

7. Verriegelungsvorrichtung (30) nach einem der Ansprüche 1 bis 6, wobei der Anschlag (58) des zweiten männlichen Elements (48) umfasst:
- einen kegel- oder halbkugelförmigen Abschnitt (62), der an seinem Teil mit dem kleinsten radialen Durchmesser am ersten Ende (22A) des Zugglieds (22) befestigt ist, und
- in der Verlängerung des Teils mit dem größten radialen Durchmesser des kegel- oder halbkugelförmigen Abschnitts (62) einen Kragen (64), dessen Außendurchmesser größer ist als die Abmessungen des Durchgangs (36) des ersten weiblichen Elements (34).

8. Verriegelungsvorrichtung (30) nach Anspruch 7, wobei der Anschlag (58) des zweiten männlichen Elements (48) einen radialen Schlitz (66) zum Einführen des Seils (32) umfasst.

9. Verriegelungsvorrichtung (30) nach einem der Ansprüche 1 bis 8, die weiter eine Leuchtanzeige (78) umfasst, deren Aufleuchten automatisch durch Kontakt zwischen dem ersten weiblichen Element (34) und dem zweiten männlichen Element (48) ausgelöst wird.

10. Verfahren zur Zugverriegelung eines Seils (32) mit Hilfe einer Verriegelungsvorrichtung (30) nach einem der Ansprüche 1 bis 9, das die folgenden Schritte umfasst:
- Befestigen (102) des ersten weiblichen Elements (34) der Verriegelungsvorrichtung (30) an einem Träger (74), und Einführen des Seils (32) in den Durchgang (36) dieses ersten weiblichen Elements (34),
- Befestigen (104) des zweiten männlichen Elements (48) der Verriegelungsvorrichtung (30) am Seil (32) vor dem Durchgang (36), der vom Seil (32) in einer vorbestimmten Zugrichtung des Seils (32) durchlaufen wird, durch Vorspannen der Backen (12, 20) der Seilspannzange (10) am Seil (32), und
- Ziehen (112) des Seils in die vorbestimmte Richtung, bis der Anschlag (58) des zweiten männlichen Elements (48) den Durchgang (36) des ersten weiblichen Elements (34) erreicht und das Seil (32) durch Anschlag am ersten weiblichen Element (34) und durch auf das Zugglied (22) ausgeübten Zug, der ein zusätzliches Verspannen der Backen (12, 20) am Seil (32) bewirkt, zugverriegelt.

11. Verriegelungsverfahren nach Anspruch 10, wobei das Ziehen (112) des Seils (32) mit Hilfe eines Helikopters (82), der ein zusätzliches Seil (86) trägt, von dem ein freies Ende mit Mitteln (88) zum Befestigen an dem auf einer Bahn einer Abrollscheibe (70) abgelegten Seil (32) ausgestattet ist, wie folgt ausgeführt wird:
- das freie Ende des auf der Scheibenbahn (70) abgelegten Seils (32), das sich in der vorbestimmten Zugrichtung nach der Scheibe (70) befindet, wird mit Mitteln (80) zum Befestigen am zusätzlichen Seil (86) ausgestattet (106) und am Boden abgelegt,
- die Mittel (80, 88) zum Befestigen des auf der Scheibenbahn abgelegten Seils (32) und des zusätzlichen Seils (86) werden am Boden miteinander verbunden (110), und
- das Ziehen (112) des Helikopters (82) wirkt auf das zusätzliche Seil (86), das das auf der Scheibenbahn (70) abgelegte Seil (32) zieht.

## Claims

1. A device (30) for locking a cable (32) in tension, comprising a cable clamp (10) with clamping jaws (12, 20) and a traction member (22), wherein said clamp (10) is designed so that its jaws (12, 20) are actuated in clamping mode by traction exerted on a first end (22A) of the traction member (22), a second end (22B) of which is mechanically connected in displacement to at least one of the jaws (12, 20), **characterized in that**:
- the locking device (30) comprises a first female element (34) having a passage (36) intended to be traversed by the cable (32),
- the cable clamp (10) is mounted in a second male element (48) of the locking device (30), this second male element (48) being independent of the first female element (34) and intended to be integral with the cable (32) by clamping the jaws (12, 20) of the clamp (10) against the cable (32),
- the second male element (48) and the passage (36) of the first female element (34) are sized so that a portion of the second male element (48) including at least the clamping jaws (12, 20) can pass through the passage (36), and
- the second male element (48) further includes a stop (58), attached to the first end (22A) of the traction member (22), of dimensions preventing it from crossing the passage (36).

2. The locking device (30) according to claim 1, wherein the cable clamp (10) is provided with a pre-clamping element (50) extending between its jaws (12, 20).

3. The locking device (30) according to claim 2, wherein the pre-clamping element (50) comprises a rigging screw, at least one end (50B) of which can be detached from one of the jaws (12, 20) by means of a release cord (54), one end of which is fixed to the rigging screw.

4. The locking device (30) according to any one of claims 1 to 3, wherein the first female element (34) comprises a ring (38) for holding the cable (32), having an opening (40) with a pivot (42), for example with a snap hook, for insertion of the cable (32) into the ring (38).

5. The locking device (30) according to claim 4, wherein the first female element (34) has a fork (76) for attachment to a support (74) and carrying the holding ring (38).

6. The locking device (30) according to any one of claims 1 to 5, wherein the second male element (48) comprises a cover (56) for protecting the clamping jaws (12, 20) having a tapered shape and rounded edges facilitating its insertion into the passage (36) of the first female element (34).

7. The locking device (30) according to any one of claims 1 to 6, wherein the stop (58) of the second male element (48) comprises:
- a conical or hemispherical portion (62) fixed, in its part of lesser radial diameter, to the first end (22A) of the traction member (22), and
- a collar (64), in the extension of the part with the largest radial diameter of the conical or hemispherical portion (62), whose outer diameter is greater than the dimensions of the passage (36) of the first female element (34).

8. The locking device (30) according to claim 7, wherein the stop (58) of the second male element (48) has a radial groove (66) for inserting the cable (32).

9. The locking device (30) according to any one of claims 1 to 8, further comprising an indicator light (78), which is switched on automatically by contact between the first female element (34) and the second male element (48).

10. A method for tension locking a cable (32) using a locking device (30) according to any one of claims 1 to 9, comprising the following steps:
- fixing (102) the first female element (34) of the locking device (30) to a support (74), and inserting the cable (32) into the passage (36) of this first female element (34),
- fastening (104) the second male element (48) of the locking device (30) to the cable (32), upstream of the passage (36) through which the cable (32) passes according to a predetermined direction of traction of the cable (32), by pre-clamping the jaws (12, 20) of the cable clamp (10) against the cable (32), and
- pulling (112) the cable in the predetermined direction until the stop (58) of the second male element (48) reaches the passage (36) of the first female element (34) and locks the cable (32) in tension by abutment against the first female element (34) and by pulling on the pulling member (22) causing additional clamping of the jaws (12, 20) against the cable (32).

11. The locking method according to claim 10, wherein the traction (112) of the cable (32) is carried out using a helicopter (82), carrying an additional cable (86), a free end of which is provided with means (88) for fixing to the cable (32) deposited on a sheave of an unwinding pulley (70), in the following manner:
- the free end of the cable (32) deposited on the sheave of the pulley (70), located downstream of the pulley (70) according to the predetermined direction of traction, is provided (106) with means (80) for attachment to the additional cable (86) and is deposited on the ground,
- the means (80, 88) for fixing the cable (32) deposited on the pulley sheave and the additional cable (86) are connected (110) to each other on the ground, and
- the traction (112) of the helicopter (82) acts on the additional cable (86) which pulls the cable (32) deposited on the pulley sheave (70).
